# EUROPEAN PATENT APPLICATION

(11) **EP 4 672 695 A1**
(43) Date of publication of application: **31.12.2025**
(21) Application number: 24185407.4
(22) Date of filing: 28.06.2024
(51) Int. Cl.: H04L 41/0866, H04L 41/12

(54) **VERIFICATION UNIT AND METHOD FOR LOCATION VERIFICATION OF INSTALLED CABIN DEVICES IN AN AIRCRAFT SINGLE PAIR ETHERNET NETWORK**

(71) Applicant: Airbus Operations GmbH, 21129 Hamburg (DE)
(72) Inventor: Krüger, Leo, Hamburg (DE); Heinke, Burkhard, Hamburg (DE); Tillack-Nieveler, Christoph, Hamburg (DE)

(57) **Abstract**

The present invention relates to a verification unit (1) for location verification of installed cabin devices (5, 6, 7) in an aircraft (100) single pair ethernet network. This verification unit (1) comprises a computer unit (2) with computer program (3) configured to provide a multidrop network architecture (4) for connecting a plurality of installed cabin devices (5, 6, 7) in an aircraft (100) to the computer unit (2) with computer program (3). The computer unit (2) with computer program (3) is further configured to verify a respective location of the installed cabin devices (5, 6, 7) in an aircraft (100) depending on a comparison based on a configuration list (8) of the installed cabin devices (5, 6, 7) in the aircraft (100) stored in the computer program (3) and at least one connection routine of the multidrop network architecture (4). In addition, a corresponding method (M) is disclosed.

## Description

### TECHNICAL FIELD OF THE INVENTION

The present invention pertains to a verification unit and method for location verification of installed cabin devices in an aircraft single pair ethernet network.

### TECHNICAL BACKGROUND

Modern aircraft are equipped with numerous cabin devices that are functionally connected and coupled with each other and with at least one higher-level control unit. The installed cabin devices are not only checked for their actual function in relation to a specific purpose at the end of an assembly, but also for their functionality in relation to their location in the associated network. The focus here is on the correct installation position as well as their correct coupling or networking.

An exclusively manual approach to these complex quality routines has increasingly proven to be too costly. Traditional methods in this technical field like the use of DIP switches already provide initial approaches to automation, although the results obtained could be further improved in the future.

In parallel, approaches are being developed that use multidrop networks to enable appropriate networking of cabin devices within the aircraft, for example in the cabin itself as well as in the cockpit or in the cargo area.

The use of a multidrop network requires a clear identification of the network participants via their installation location. Up to now, manual settings have been used on aircraft for the clear identification of devices in networks, e.g. bus networks (pin programming). The time required for this task is accompanied by correspondingly high costs. These costs can arise especially when human work steps in particular have to be checked more closely in order to achieve a particularly high level of accuracy.

### SUMMARY OF THE INVENTION

Against this background, it is an object of the present invention to provide a cost-effective technical solution for verifying a correct location of network participants in complex SPE multi networks in aircraft.

This object is achieved by a verification unit for location verification of installed cabin devices in an aircraft single pair ethernet network having the features of claim 1 and a method for location verification of installed cabin devices in an aircraft single pair ethernet network having the features of claim 6.

According to the invention, a verification unit for location verification of installed cabin devices in an aircraft single pair ethernet network comprises a computer unit with computer program configured to provide a multidrop network architecture for connecting a plurality of installed cabin devices in an aircraft to the computer unit with computer program wherein the computer unit with computer program is further configured to verify a respective location of the installed cabin devices in an aircraft depending on a comparison based on a configuration list of the installed cabin devices in the aircraft stored in the computer program and at least one connection routine of the multidrop network architecture.

Further according to the invention, a method for location verification of installed cabin devices in an aircraft single pair ethernet network comprising the following steps: providing and activating a verification unit according to the invention, creating and storing a configuration list of installed cabin devices in an aircraft on the computer program of the verification unit, performing a comparison based on the configuration list of the installed cabin devices in the aircraft stored in the computer program and at least one connection routine of the multidrop network architecture of the verification unit, outputting results of the comparison performed so that a respective location of the installed cabin devices in the aircraft can be verified.

Further according to the invention, an aircraft comprises a verification unit according to the invention and at least one installed cabin device connected to the verification unit via a multidrop network architecture of the verification unit.

Thus, one idea of the present invention is to provide an efficient an robust installation solution for an installation of multidrop networks on aircraft. The presented invention can be seen as a comprehensive onboard network solution that supports autolocation in a multidrop network.

This new way of verifying locations of multidrop network participants minimizes installation errors because it represents a very reliable and cost-effective technical solution for verifying a correct location of network participants in complex multi networks in aircraft. It can be seen as a cost-effective technical solution because it saves installation time.

Instead of a manual setting, the presented invention favors an automatic solution based on a comparison of known facts, which are provided by means of a configuration list, with collected facts, which can be determined during the installation itself.

Further advantages can be seen in the fact that the presented unit and the inventive methodology is flexible for short-term changes to line replaceable unit positions or replacement of devices in the final assembly line.

The multidrop network architecture of the verification unit can comprise any technical means that are necessary to establish a corresponding multidrop network between the computer unit and the respective cabin devices. This includes in particular any components that are required in the sense of necessary interfaces to the respective technical participants in order to establish a sequentially constructed multidrop network.

The cabin devices can, for example, be respective line replaceable units or corresponding lighting devices in the cabin as well as in the cockpit or in the cargo area.

The aforementioned advantages of the present inventions, to the extent that they are transferable, also apply to the disclosed method and the disclosed aircraft.

According to an embodiment of the invention, the at least one connection routine of the multidrop network architecture comprises an evaluation of the temporal transmission rate of transmission signals from the installed cabin devices to the computer unit.

The respective values of the individual temporal transmission rates of transmission signals from the installed cabin devices to the computer unit thus allow a spatial classification of the connected cabin devices, whereby a higher value is correspondingly associated with a more distant localization. In this respect, a verification of already actively connected cabin devices can be derived by means of the comparison and the already known values from the configurations list.

According to another embodiment of the invention, the configuration list comprises information about the installed order or respective cable lengths of the respective cables between the respective installed cabin device and the computer unit.

The individual temporal transmission rates of transmission signals (measured times) from the installed cabin devices to the computer unit reflect the respective distances of wire length to the installed cabin devices (network participants). In conjunction with further information from the configurations list, precise local locations of the respective participants can be determined, so that corresponding statements about actively connected participants can be made.

In this context, it can advantageously if the respective cable connections or the cables themselves or the respective relevant cable sections between the computer unit and the respective cabin devices have at least a minimal length so that the measurement times can be determined in a reliable way.

A sufficient distinguishability of the individual lengths mentioned above can also be advantageously in order to enable a more precise assignment of the measured times to the information held in the configuration list.

According to another embodiment of the invention, the computer unit with computer program is configured to provide at least one alarm routine depending on at least one result of the comparison.

A user-friendly evaluation can thus be ensured, so that in the event of detected faulty connections or corresponding technical connection problems, an assignment to the affected cabin device can be provided very quickly.

In some embodiments of the invention, the multidrop network architecture comprises at least one Single-Pair Ethernet, SPE, communication link for connecting the installed cabin devices in the aircraft to the computer unit. Stable and reliable connections can thus be provided so that the multidrop network architecture of the verification unit can be advantageously supported. These SPE communication links can be based, for example, on the Single Pair Ethernet 10Base-T1s IEEE 802.3cg standard.

According to another embodiment of the invention, the connection routine of the multidrop network architecture used in the inventive method comprises an evaluation step of the temporal transmission rate of transmission signals from the installed cabin devices to the computer unit.

The respective values of the individual temporal transmission rates of transmission signals from the installed cabin devices to the computer unit thus allow a spatial classification of the connected cabin devices, whereby a higher value is correspondingly associated with a more distant localization. In this respect, a verification of already actively connected cabin devices can be derived by means of the comparison and the already known values from the configurations list.

According to another embodiment of the invention, the configuration list comprises information about the installed order or respective cable lengths of the respective cables between the respective installed cabin devices and the computer unit.

As previously mentioned, it can be of advantaged if the respective cable connections or the cables themselves or the respective relevant cable sections between the computer unit and the respective cabin devices have at least a minimal length so that the measurement times can be determined in a reliable way.

A sufficient distinguishability of the individual lengths mentioned above can also be advantageously in order to enable a more precise assignment of the measured times to the information held in the configuration list.

According to another embodiment of the invention, the creating of the configuration list of the installed cabin devices in the aircraft is carried out by using additional tools, in particular QR readers.

This means that at least an initial inspection of the cabin devices to be connected can be carried out. In conjunction with the verification routine or method presented, this results in a particularly efficient and reliable method for location verification of installed cabin devices in an aircraft. For this purpose, the respective cabin devices can, for example, have corresponding QR codes so that a quick and reliable assignment is possible and the necessary configurations list can therefore be created.

### BRIEF SUMMARY OF THE DRAWINGS

The present invention is explained in more detail below with reference to the embodiments shown in the schematic figures:
- Fig. 1: shows a schematic view of a verification unit according to an embodiment of the invention;
- Fig. 2: shows a schematic view of an aircraft with a verification unit according to an embodiment of the invention;
- Fig. 3: schematically depicts a flow diagram of a method for location verification of installed cabin devices in an aircraft single pair ethernet network using the verification unit of Fig. 1.

In the figures of the drawing, elements, features and components which are identical, functionally identical and of identical action are denoted in each case by the same reference designations unless stated otherwise.

### DESCRIPTION OF EXEMPLARY EMBODIMENTS

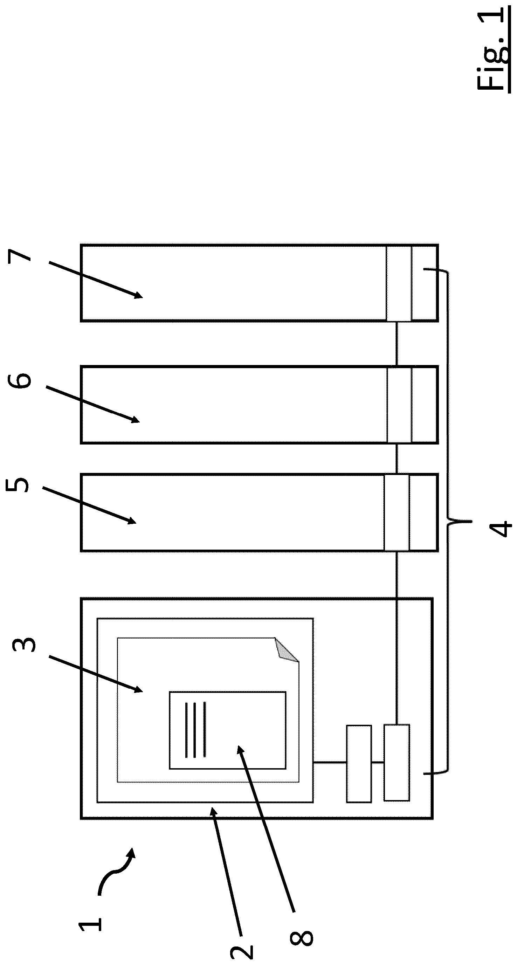

Fig. 1 shows a schematic view of a verification unit 1 according to an embodiment of the invention. The verification unit 1 is shown with a computer unit 2 with computer program 3. This computer unit 2 with computer program 3 is configured to provide a multidrop network architecture 4 for connecting a plurality of installed cabin devices 5, 6, 7 in an aircraft (not shown) to the computer unit 2 with computer program 3. The cabin devices can, for example, be respective line replaceable units or corresponding lighting devices in the cabin as well as in the cockpit or in the cargo area.

The computer unit 2 with computer program 3 is further configured to verify a respective location of the installed cabin devices 5, 6, 7 in an aircraft (not shown) depending on a comparison based on a configuration list 8 of the installed cabin devices 5, 6, 7 in the aircraft (not shown) stored in the computer program 3 and at least one connection routine of the multidrop network architecture 4.

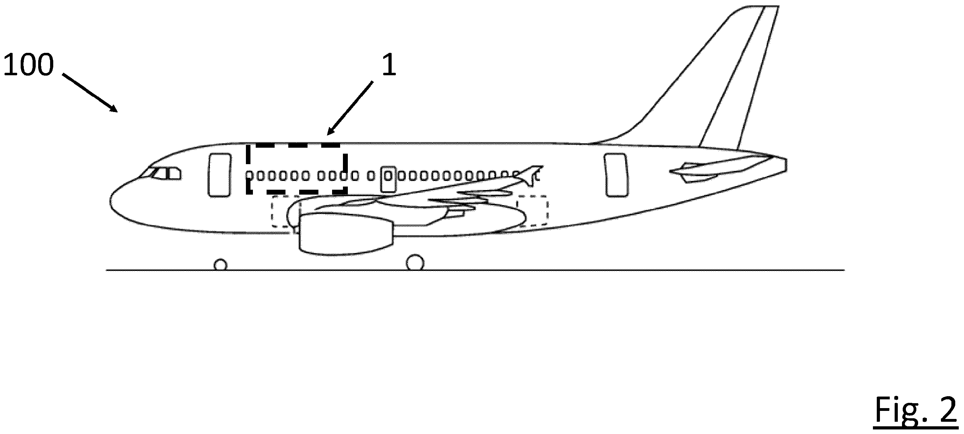

Fig. 2 shows a schematic view of an aircraft 100 with a verification unit 1 according to an embodiment of the invention.

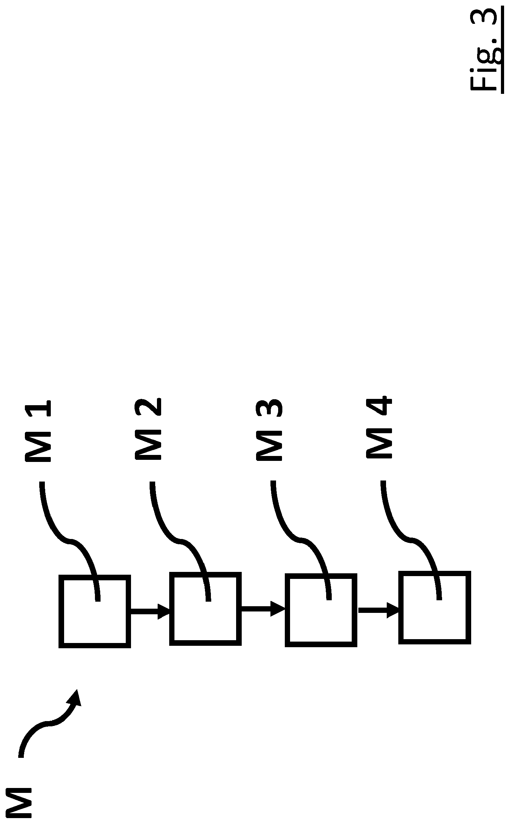

Fig. 3 schematically depicts a flow diagram of a method M for location verification of installed cabin devices 5, 6, 7 in an aircraft 100 single pair ethernet network using the verification unit of Fig. 1. This method M comprises under M1 providing and activating a verification unit 1 according to the invention. Furthermore, the method comprises under M2 creating and storing a configuration list of installed cabin devices 5, 6, 7 in an aircraft 100 on the computer program 3 of the verification unit 1. Furthermore, the method comprises under M3 performing a comparison based on the configuration list of the installed cabin devices 5, 6, 7 in the aircraft 100 stored in the computer program 3 and at least one connection routine of the multidrop network architecture of the verification unit 1. Furthermore, the method comprises under M4 outputting results of the comparison performed so that a respective location of the installed cabin devices 5, 6, 7 in the aircraft 100 can be verified.

In this respect, the presented method can also be referred to as an automatic localization method of multidrop participants that are connected to a certain or specified aircraft software platform.

In summary, the method could be also described in more detail as follows: A central controller (e.g. master unit) will be configured with a multidrop network attitude. The connected multidrop network participants will be sequentially requested and compared with a preloaded aircraft configuration list. If the following auto check can be seen as in accordance with basic requirements, an auto link procedure will be started with respective measurements of participants response times. The measures times reflect the distance of cable length (wire length) to participants and certain positions or positions sequences on the aircraft. Following an auto allocation will be activated and a final function test shows correct installation. Manual check might be necessary to verify the auto location method to ensure quality.

In a further detailed description, the method according to the invention could also be described in more detail as follows: In the final assembly line, each monument (cabin device) must be installed, including cabling and line replaceable unit, so that it is ready for the aircraft to be "turned on". The final assembly line loads the expected configuration list on the installation device. This can also be done by scanning the respective QR codes. The aircraft receives its head of version configuration software load, which will be internally distributed to each master unit as a bus participant of a multidrop. Each master unit will start a network discovery mode to check the expected bus participants. When the automatic checklist is completed, the architecture discovery mode is started and each participant is logically linked to the predetermined installation order. Before the assignment list is to be finalized, a visual inspection with the support of the installation device (verification unit) is required to verificative the successful auto location method.

The application of the method is conceivable in the entire aircraft that allows the installation of ethernet technology (e.g. cabin, cargo and cockpit) not only in aircraft manufacturing but also in the case of retrofit.

### LIST OF REFERENCE SIGNS

- 1: verification unit
- 2: computer unit
- 3: computer program
- 4: multidrop network architecture
- 5: cabin device
- 6: cabin device
- 7: cabin device
- 8: configuration list
- 100: aircraft
- M: method
- M1 - M4: method steps

## Claims

1. Verification unit (1) for location verification of installed cabin devices (5, 6, 7) in an aircraft (100) single pair ethernet network comprising a computer unit (2) with computer program (3) configured to provide a multidrop network architecture (4) for connecting a plurality of installed cabin devices (5, 6, 7) in an aircraft (100) to the computer unit (2) with computer program (3) wherein the computer unit (2) with computer program (3) is further configured to verify a respective location of the installed cabin devices (5, 6, 7) in an aircraft (100) depending on a comparison based on a configuration list (8) of the installed cabin devices (5, 6, 7) in the aircraft (100) stored in the computer program (3) and at least one connection routine of the multidrop network architecture (4).

2. Verification unit (1) according to claim 1, wherein the at least one connection routine of the multidrop network architecture (4) comprises an evaluation of the temporal transmission rate of transmission signals from the installed cabin devices (5, 6, 7) to the computer unit (2).

3. Verification unit (1) according to one of the claims 1 to 2, wherein the configuration list (8) comprises information about the installed order or respective cable lengths of the respective cables between the respective installed cabin device (5, 6, 7) and the computer unit (2).

4. Verification unit (1) according to one of the claims 1 to 3, wherein the computer unit (2) with computer program (3) is configured to provide at least one alarm routine depending on at least one result of the comparison.

5. Verification unit (1) according to one of claims 1 to 4, wherein the multidrop network architecture (4) comprises at least one Single-Pair Ethernet, SPE, communication link for connecting the installed cabin devices (5, 6, 7) in the aircraft (100) to the computer unit (2).

6. Method (M) for location verification of installed cabin devices (5, 6, 7) in an aircraft (100) single pair ethernet network comprising:
• providing and activating (M1) a verification unit (1) according to one of the claims 1 to 5;
• creating and storing (M2) a configuration list (8) of installed cabin devices (5, 6, 7) in an aircraft (100) on the computer program (3) of the verification unit (1);
• performing (M3) a comparison based on the configuration list (8) of the installed cabin devices (5, 6, 7) in the aircraft (100) stored in the computer program (3) and at least one connection routine of the multidrop network architecture (4) of the verification unit (1);
• outputting (M4) results of the comparison performed so that a respective location of the installed cabin devices (5, 6, 7) in the aircraft (100) can be verified.

7. Method (M) according to claim 6, wherein the connection routine of the multidrop network architecture (4) comprises an evaluation step of the temporal transmission rate of transmission signals from the installed cabin devices (5, 6, 7) to the computer unit (2).

8. Method (M) according to one of claims 6 to 7, wherein the configuration list (8) comprises information about the installed order or respective cable lengths of the respective cables between the respective installed cabin devices (5, 6, 7) and the computer unit (2).

9. Method (M) according to one of claims 6 to 8, wherein the creating (M2) of the configuration list (8) of the installed cabin devices (5, 6, 7) in the aircraft (100) is carried out by using additional tools, in particular QR readers.

10. Aircraft (100) comprising a verification unit (1) according to one of claims 1 to 5 and at least one installed cabin device (5, 6, 7) connected to the verification unit (1) via a multidrop network architecture (4) of the verification unit (1).
